# EUROPEAN PATENT APPLICATION

(11) **EP 4 503 569 A1**
(43) Date of publication of application: **05.02.2025**
(21) Application number: 23779547.1
(22) Date of filing: 14.03.2023
(51) Int. Cl.: H04L 51/08, G06F 3/04842, G06F 3/04883, G06F 40/166

(54) **INFORMATION EDITING PROGRAM, INFORMATION EDITING METHOD, AND INFORMATION EDITING SYSTEM**

(30) Priority: 31.03.2022 JP 2022059102
(71) Applicant: BROTHER KOGYO KABUSHIKI KAISHA, Nagoya-shi, Aichi 467-8561 (JP)
(72) Inventor: YASUI, Ryo, Nagoya-shi, Aichi 467-8562 (JP); SATO, Hirotaka, Nagoya-shi, Aichi 467-8562 (JP); UEDA, Yuma, Nagoya-shi, Aichi 467-8562 (JP); YAMAMOTO, Ryo, Nagoya-shi, Aichi 467-8562 (JP)
(74) Representative: J A Kemp LLP
(86) International application number: PCT/JP2023/009800
(87) International publication number: WO 2023/189527

(57) **Abstract**

Provided is a non-transitory computer-readable storage medium storing an information editing program, an information editing method, and an information editing system that enable an edited portion of information to be notified by including the edited portion in a message.

In a case where editing of information is performed on a client device 3A, a notification mail 70 to be sent to a client device 3B includes a screenshot 71 of the entire document before editing, a screenshot 72 of the entire document after editing with highlighting 72A, a description 73 informing deletion, a description 82 informing a handwritten entry, a screenshot 77 of the handwritten entry, a text 76 read by optical reading processing, a description 81 informing a text entry, a text 74 entered by the text entry, a screenshot 75 of the text 74, a description 83 informing that a still image or a moving image has been edited, the edited still image 78 or the edited moving image, a description informing that edit data of another type such as a figure has been edited, and a screenshot 79 of the figure.

## Description

### TECHNICAL FIELD

The present invention relates to a non-transitory computer-readable storage medium storing an information editing program, an information editing method, and an information editing system that enable editing of information in respective terminals among which the information is to be shared.

### BACKGROUND

There has been disclosed a technique for enabling sharing of information among a plurality of terminals and enabling editing of the information in each of the plurality of terminals. For example, in Patent Literature 1, a first electronic whiteboard and a second electronic whiteboard are placed at a first site and a second site, respectively. In response to a first user performing an operation to edit a particular existing object at the first site, details of the operation are notified to a second user at the second site.

### Citation List

### Patent Literature

[Patent Literature 1] Japanese Patent No. 5810779

### SUMMARY

### Technical Problem

In response to the first user editing the particular existing object, the particular existing object is updated. Thus, the particular object before editing and the particular object after editing cannot be compared with each other. Therefore, even if the second user at the second site is notified of the details of the operation performed by the first user at the first site in response to the first user at the first site editing the particular object, it is difficult for the second user to recognize a specific portion that has been edited unless the second user remembers the details of the particular object before editing.

An object of the present invention is to provide a non-transitory computer-readable storage medium storing an information editing program, an information editing method, and an information editing system that enable an edited portion of information to be notified by including the edited portion in a message.

### Solution to Problem

According to a first aspect of the invention, a non-transitory computer-readable storage medium stores an information editing program that enables sharing of information among a first terminal and a second terminal and editing of the information in each of the first terminal and the second terminal. The information editing program causes a computer to execute: storing a state of information entered or edited on the first terminal as a first state; subsequent to storing the information in the first state, obtaining a state of the information after editing as a second state in response to the information having been edited on the first terminal; comparing the information in the second state and the information in the first state; extracting change data based on a result of the comparison, the change data representing a changed portion that has been changed from the information in the first state; and notifying the second terminal of the changed portion by including the change data in a message, the second terminal being different from the first terminal. According to the first aspect, the computer that executes the information editing program can include the change data representing the edited portion of the information in the message to notify the second terminal of the change data in response to a user of the first terminal editing the information. Thus, a user of the second terminal can readily recognize the edited portion in the information.

According to a second aspect of the invention, an information editing method executable by a computer in accordance with an image editing program that enables sharing of information among a first terminal and a second terminal and editing of the information in each of the first terminal and the second terminal, includes: storing a state of information entered or edited on the first terminal as a first state; subsequent to storing the information in the first state, obtaining a state of the information after editing as a second state in response to the information having been edited on the first terminal; comparing the information in the second state and the information in the first state; extracting change data based on a result of the comparison, the change data representing a changed portion that has been changed from the information in the first state; and notifying the second terminal of the changed portion by including the change data in a message, the second terminal being different from the first terminal.

According to a third aspect of the invention, an information editing system includes a server; a first terminal and a second terminal connected to each other via the server. The information editing system enables sharing of information among the first terminal and the second terminal and editing of the information in each of the first terminal and the second terminal. The server is configured to: receive information that has been entered or edited on the first terminal and store a state of the received information as a first state; subsequent to storing the information in the first state, obtain a state of the information after editing as a second state in response to the information having been edited on the first terminal; compare the information in the second state and the information in the first state; extract change data based on a result of the comparison, the change data representing a changed portion that has been changed from the information in the first state; and notify the second terminal of the changed portion by including the change data in a message, the second terminal being different from the first terminal. According to the second aspect, the same effect as in the first aspect is achieved.

According to a fourth aspect of the invention, an information editing system includes a first terminal and a second terminal. The information editing system enables sharing of information among the first terminal and the second terminal and editing of the information in each of the first terminal and the second terminal. The first terminal is configured to: receive information that has been entered or edited on the first terminal and store a state of the received information as a first state; subsequent to storing the information in the first state, obtain a state of the information after editing as a second state in response to the information having been edited on the first terminal; compare the information in the second state and the information in the first state; extract change data based on a result of the comparison, the change data representing a changed portion that has been changed from the information in the first state; and notify the second terminal of the changed portion by including the change data in a message, the second terminal being different from the first terminal. According to the third aspect, the same effect as in the first aspect is achieved.

### BRIEF DESCRIPTION OF THE DRAWINGS

[FIG. 1] FIG. 1 illustrates an overview of an information editing system 1.
[FIG. 2] FIG. 2 is a flowchart of a new creation process.
[FIG. 3] FIG. 3 is a flowchart of an email receiving process.
[FIG. 4] FIG. 4 is a diagram for explaining an operation of creating a new document.
[FIG. 5] FIG. 5 is a flowchart of an editing process.
[FIG. 6] FIG. 6 is a continuation of the editing process shown in FIG. 5.
[FIG. 7] FIG. 7 is a continuation of the editing process shown in FIG. 6.
[FIG. 8] FIG. 8 is a continuation of the editing process shown in FIG. 7.
[FIG. 9] FIG. 9 is a diagram for explaining an operation of editing a document.
[FIG. 10] FIG. 10 is a flowchart of an editing process executed by a server 2 according to a modification.
[FIG. 11] FIG. 11 is a flowchart of the editing process according to the modification in a case where change points include partial deletion data.

### DETAILED DESCRIPTION

An embodiment of the present invention will be described with reference to the drawings. The drawings to be referred to are used for describing technical features that may be adopted by the present invention, and configurations of devices described herein are not intended to be limited thereto, but are merely illustrative examples.

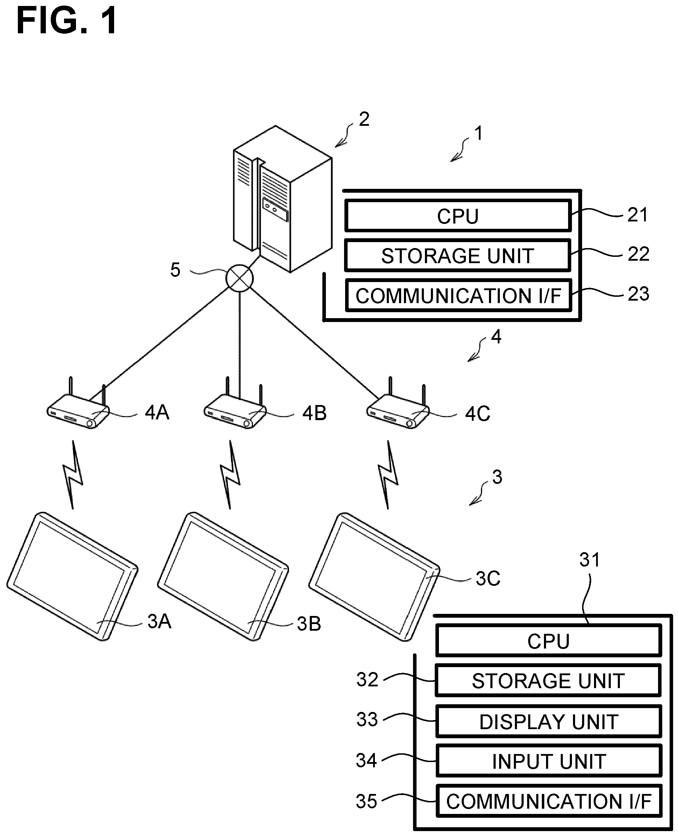

Referring to FIG. 1, an overview of an information editing system 1 will be described. The information editing system 1 includes a server 2 and client devices 3A, 3B, and 3C (also collectively referred to as "client devices 3"). The server 2 is communicably connected to access points 4A, 4B, and 4C (also collectively referred to as "access points 4") via a network line 5. The client devices 3A, 3B, and 3C are connected to the access points 4A, 4B, and 4C, respectively, so as to be wirelessly communicable with the access points 4A, 4B, and 4C, respectively. Thus, the server 2 and each of the client devices 3A, 3B, and 3C are communicable with each other via the network line 5 and a corresponding one of the access points 4. The client devices 3 are known tablet terminals.

The server 2 includes a CPU 21, a storage unit 22, and a communication interface (I/F) 23. The CPU 21 controls the server 2 entirely. The storage unit 22 is configured to store, for example, a server program to be executed by the CPU 21, and a document. The document includes a plurality of pieces of edit data. The document is data that can be displayed on a display unit 33 of each of the client devices 3 and that can be edited via an input unit 34, such as addition, entire deletion, partial deletion, or change of one or more pieces of edit data. Examples of the edit data include stroke data, character data, partial deletion data, still image data, and moving image data. The stroke data represents one or more strokes (handwriting). The stroke data includes coordinate data defining a location of each individual line segment constituting the one or more strokes in the document, and group data for grouping the line segments appropriately. The character data represents one or more character codes for, for example, characters, symbols, or both. The character data includes coordinate data defining a display location of each individual character or symbol in a document, and group data for grouping the characters, the symbols, or both appropriately. The partial deletion data represents a deletion operation performed on a portion of particular edit data. The partial deletion data includes, for example, target data representing the particular edit data targeted for partial deletion, location data representing the location where a partial deletion has been performed on the target data, and shape data representing a shape of the deleted portion. In the present embodiment, a "partial deletion" performed on particular edit data refers to deleting a portion of the target edit data, and an "entire deletion" performed on particular edit data refers to deleting the target edit data in its entirety. In the edit data targeted for partial deletion, a portion that positionally coincides with the partial deletion data is deleted and thus the edit data is updated. The still image data represents a still image that can be displayed on the display unit 33, and includes coordinate data indicating a display location of the still image in the document. The moving image data represents a moving image that can be displayed on the display unit 33, and includes coordinate data indicating a display location of the moving image in the document. The document can be shared among the client devices 3 and displayed on each of the client devices 3, and can be edited in each of the client devices 3.

The CPU 21 receives a document edited in a particular client device 3 and stores the document in the storage unit 22. Further, the CPU 21 shares a storage area of the document in the storage unit 22 with all the client devices 3 on the network so that each client device 3 can download the document through the network line 5. The CPU 21 is capable of generating a URL that identifies the location of the document in the storage area. The communication I/F 23 is a communication module for performing communication with the respective client devices 3 via the network line 5 and the corresponding access points 4.

Since all the client devices 3 have the same configuration, the client device 3C will be described as a representative example. The client device 3C includes a CPU 31, a storage unit 32, a display unit 33, an input unit 34, and a communication I/F 35. The CPU 31 controls the client device 3C entirely. The storage unit 32 is configured to store, for example, an information editing program to be executed by the CPU 31, a document, and a program for known optical character recognition (OCR) processing. The CPU 31 receives a document from the server 2 and stores the document in the storage unit 32. The CPU 31 can perform editing such as addition, entire deletion, or change of edit data on the document stored in the storage unit 32. The display unit 33 is a liquid crystal display. The input unit 34 is a touch screen disposed on a surface of the display unit 33. The communication I/F 35 is a communication module for performing communication with the server 2 via the network line 5 and a corresponding one of the access points 4.

A description will be provided on how the information editing system 1 behaves when a document is newly created and edited. In the information editing system 1, in response to editing being performed on a document in a particular client device 3, for example, the client device 3A, on which an application for sharing documents (hereinafter referred to as a "sharing application") is running, edit data is generated based on the editing, and the generated edit data is uploaded to the server 2 in real time by the client device 3A. In response to the uploading of the edit data to the server 2 from the sharing application running on the client device 3A, the uploaded edit data is immediately downloaded by the other client devices 3, for example, the client devices 3B and 3C, and the content of the editing is instantly reflected in the same document. Nevertheless, for example, when a document is newly created or an existing document is edited on the client device 3A, the same document might not be opened on the client devices 3B or 3C. In this case, in the information editing system 1, an email notifying of a new document creation or an email reporting a history of editing on the existing document is sent to the client devices 3B, 3C, or both, from the client device 3A.

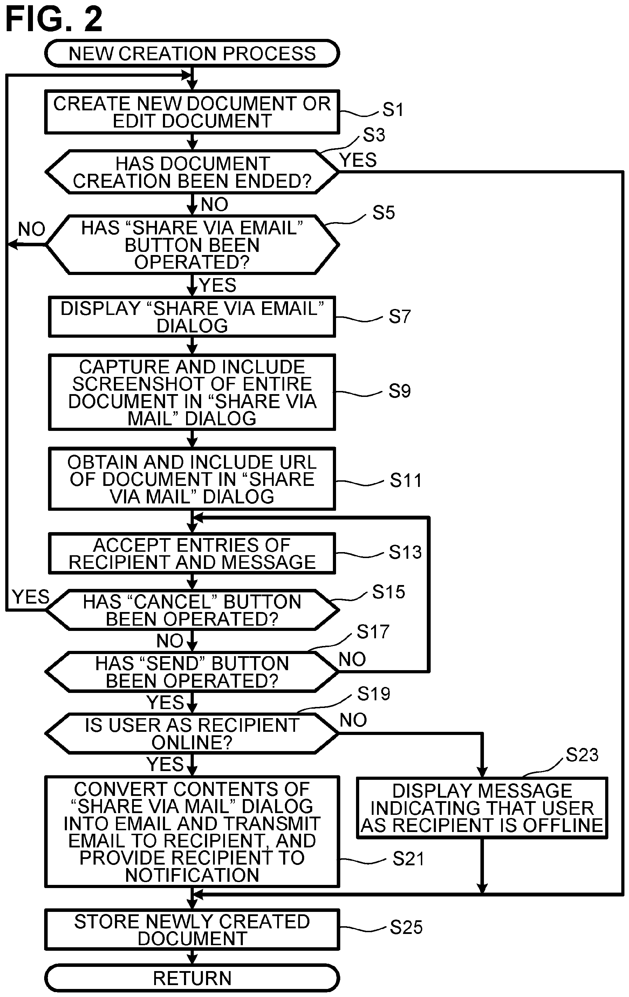

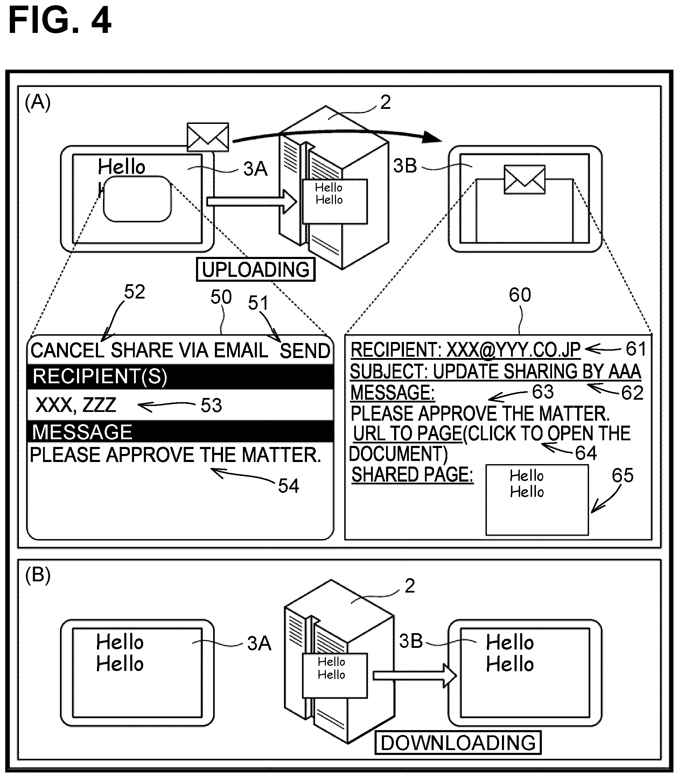

Referring to FIGS. 2 and 4A, a description will be provided on a new creation process executed in a particular client device 3 (e.g., the client device 3A) when a document is newly created. In response to a user performing an operation to create a new document during a main process on the client device 3A on which the sharing application is running, the CPU 31 loads and executes a program of the new creation process from the storage unit 32 to create and display a new blank document on the display unit 33 (S1). The CPU 31 edits the document based on a user's operation. Edit data is generated based on the user's operation and is added to the document. The generated edit data is then uploaded to the server 2.

In response to the user performing an operation to end the document creation on the client device 3A (S3:YES), the CPU 31 stores the newly created document in the storage unit 32 (S25) and then ends the new creation process to return to the main process of the sharing application.

A document editing screen includes a "SHARE VIA EMAIL" button. In a case where the user has neither completed the document creation on the client device 3A (S3 :NO) nor operated the "SHARE VIA EMAIL" button (S5:NO), the CPU 31 returns the process to S1, thereby allowing the user to continue creating the document. In response to the user operating the "SHARE VIA EMAIL" button on the client device 3A after completing the document creation (S5:YES), the CPU 31 displays a "share via email" dialog 50 on the display unit 33 (S7). As illustrated in FIG. 4A, the "share via email" dialog 50 includes a "SEND" button 51, a "CANCEL" button 52, a recipient addition field 53, and a message entry field 54.

As illustrated in FIG. 2, the CPU 31 captures a screenshot of the entire document to be displayed on the display unit 33 and includes the screenshot in the "share via email" dialog 50 (S9). The CPU 31 obtains a URL of the document from the server 2 and includes the URL in the "share via email" dialog 50 (S11). A state of the "share via email" dialog 50 after data and/or a description has been included is not illustrated in any figures.

The CPU 31 accepts entries to the recipient addition field 53 and the message entry field 54 in the "share via email" dialog 50 (S13). As illustrated in FIG. 4A, for example, the user of the client device 3A is enabled to select one or more users of the client devices 3, for example, users of the client devices 3B and 3C, who are targets for document sharing, from a user list display box. The CPU 31 includes and displays a selected user in the recipient addition field 53. The CPU 31 obtains an email address of the selected user from user data and includes the email address in the "share via email" dialog 50. In addition, the CPU 31 includes, in the "share via email" dialog 50, a message that has been entered by the user of the client device 3A in the message entry field 54.

As illustrated in FIG. 2, in response to the "CANCEL" button 52 on the client device 3A having been operated (S15:YES), the CPU 31 closes the "share via email" dialog 50 to discard the entered contents. The CPU 31 then returns the process to S1 to allow the user to continue creating the document. In a case where the "CANCEL" button 52 has not been operated (S15:NO) and the "SEND" button 51 has also not been operated (S17:NO) on the client device 3A, the CPU 31 returns the process to S13 to continue accepting entries to the "share via email" dialog 50.

In response to the "SEND" button 51 on the client device 3A having been operated (S17:YES), the CPU 31 queries the server 2 as to whether the user added as a recipient in the recipient addition field 53 is online that the sharing application is running on the client device 3 of the user as a recipient. In a case where the user as a recipient is offline (S19:NO), the CPU 31 displays a message indicating that the user as a recipient is offline on the display unit 33 of the client device 3A as a sender (S23). The CPU 31 stores the newly created document in the storage unit 32 (S25) and then ends the new creation process to return to the main process of the sharing application.

In a case where the user as a recipient is online (S19:YES), the CPU 31 converts the contents included in the "share via email" dialog 50 into a notification email 60. As illustrated in FIG. 4A, the notification email 60 includes an email address 61 of the user added as a recipient in the recipient addition field 53, a subject line 62 informing that a new document has been created, an entered message 63, a link 64 to the URL of the document, for example, "URL TO PAGE", and a screenshot 65 of the entire document. As illustrated in FIG. 2, the CPU 31 then transmits the notification email 60 to the target client device 3 used by the user as a recipient, for example, each of the client devices 3B and 3C (S21). Further, the CPU 31 provides each target client device 3 used by the user as a recipient, that is, each of the client devices 3B and 3C, with a notification notifying the transmission of the email. The CPU 31 stores the newly created document in the storage unit 32 (S25) and then ends the new creation process to return to the main process of the sharing application.

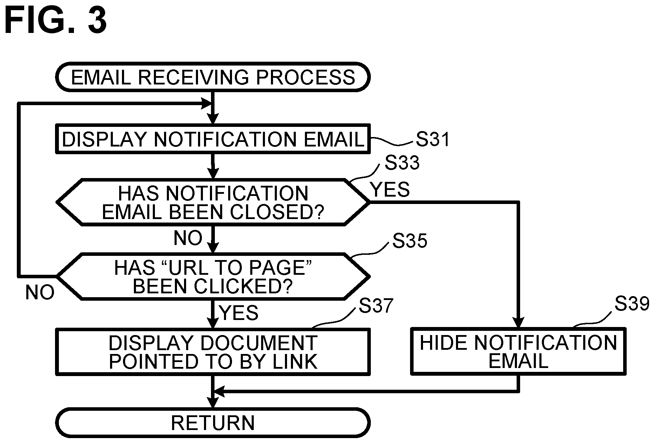

Referring to FIGS. 3 and 4B, a description will be provided on an email receiving process executed in the client device 3 (e.g., the client device 3B) used by the user as a recipient, in response to receipt of the notification email 60. In response to receiving the notification notifying the transmission of the notification email 60 while the sharing application is running on the client device 3B, the CPU 31 of the client device 3B displays the notification email 60 on the display unit 33 in accordance with a user's operation (S31). In response to the user of the client device 3B performing an operation to close the notification email 60 after confirming the notification email 60 (S33:YES), the CPU 31 hides the notification email 60 (S39) and then ends the email receiving process to return to the main process of the sharing application. In a case where the user has neither performed the operation to close the notification email 60 (S33:NO) nor clicked the link 64 to the URL of the document in the notification email 60 (S35:NO), the CPU 31 returns the process to S31 to continue displaying the notification email 60.

In response to the user of the client device 3B clicking the link 64 to the URL of the document in the notification email 60 (S35:YES), the CPU 31 downloads the document from the server 2 in accordance with the URL and displays the downloaded document on the display unit 33 (S37). The new document created by the user of the client device 3A is thus displayed on the display unit 33 of the client device 3B. The CPU 31 ends the email receiving process to return to the main process of the sharing application.

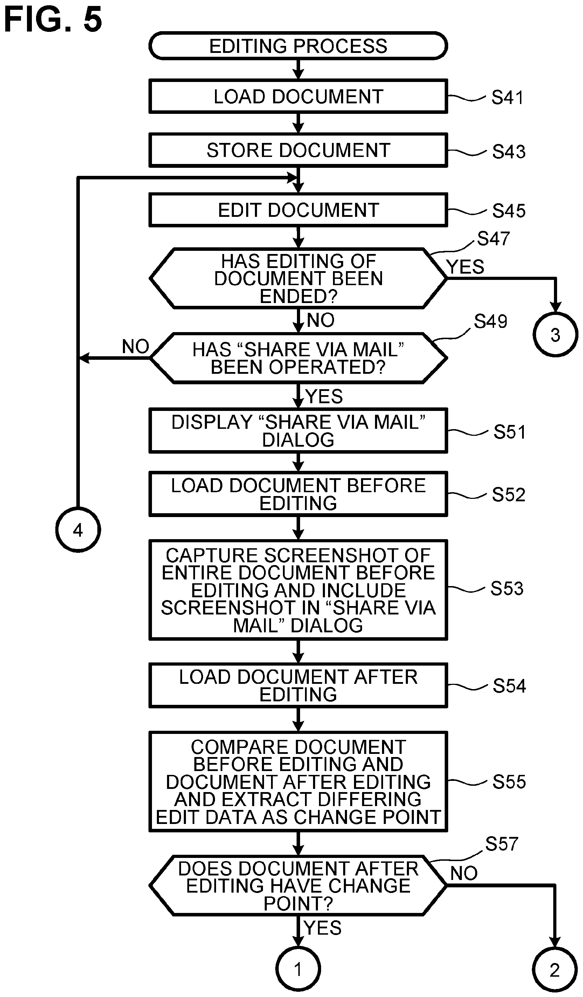

Referring to FIGS. 5 to 9, a description will be provided on an editing process executed in a particular client device 3 (e.g., the client device 3A) when an existing document is edited. In response to the user performing an operation to edit a document during the main process on the client device 3A on which the sharing application is running, the CPU 31 loads and executes a program of the editing process from the storage unit 32. For example, the user selects a document to be edited in a selection box on the client device 3A. As illustrated in FIG. 5, in a case where a document previously stored in the storage unit 32 is designated, the CPU 31 loads the document from the storage unit 32 and displays the loaded document on the display unit 33 (S41). In a case where a document stored in the server 2 is designated, the CPU 31 downloads the designated document to be edited from the server 2 and displays the downloaded document on the display unit 33. The CPU 31 stores the document to be edited in the storage unit 32 as a document before editing (S43).

The CPU 31 edits the document in accordance with a user's operation (S45). Edit data is generated based on the user's operation and is added to the document. The generated edit data is then uploaded to the server 2. In response to the user performing an operation to end the editing (S47:YES), the CPU 31 stores the edited document in the storage unit 32 (S137), and ends the editing process to return to the main process of the sharing application.

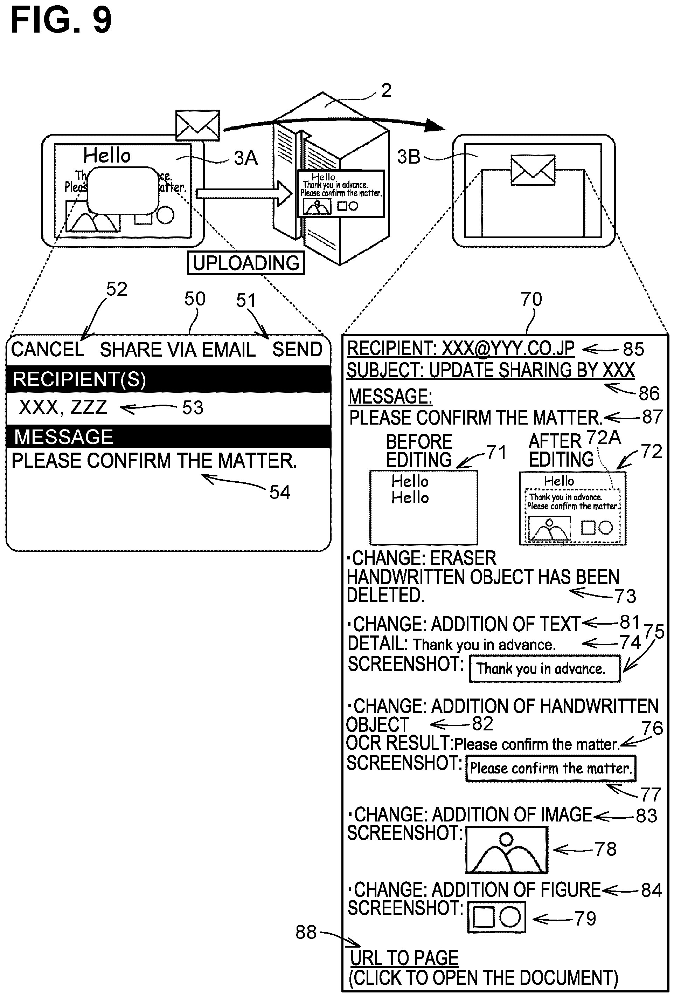

In a case where the user has neither completed the document editing (S47:NO) nor operated the "SHARE VIA EMAII," button on an editing screen (S49:NO), the CPU 31 returns the process to S45 to allow the user to continue editing the document. In response to the user operating the "SHARE VIA EMAII," button on the client device 3A after completing the document editing (S49:YES), the CPU 31 displays the "share via email" dialog 50 on the display unit 33 (S51). The CPU 31 loads the document before editing stored in the storage unit 32 in S43 into a working area of the storage unit 32 for comparison (S52). The CPU 31 captures a screenshot 71 of the entire document before editing (refer to FIG. 9) and includes the screenshot 71 in the "share via email" dialog 50 (S53).

The CPU 31 loads the document after editing into the working area of the storage unit 32 for comparison (S54). The CPU 31 compares the document before editing and the document after editing, both of which are loaded into the working area. If there is one or more differences between the plurality of pieces of edit data contained in the document before editing and the plurality of pieces of edit data contained in the document after editing, the CPU 31 extracts the differing edit data as a change point from the document after editing (S55). In a case where the document after editing has no change points compared to the document before editing (S57:NO), the CPU 31 moves the process to S121. In a case where the document is not edited, a notification email 60 is created (refer to FIG. 4A), and is transmitted to the client device 3 used by the user as a recipient.

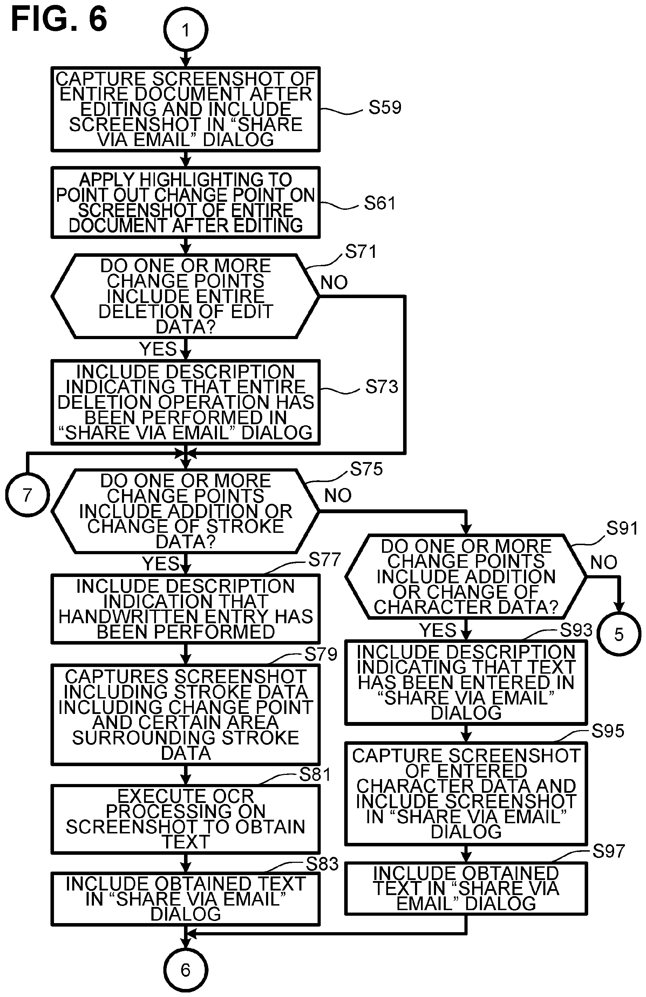

In a case where the document after editing includes one or more change points (S57:YES), as illustrated in FIG. 6, the CPU 31 captures a screenshot 72 of the entire document after editing and includes the screenshot 72 in the "share via email" dialog 50 (S59). The CPU 31 applies highlighting 72A to point out the location of the change point extracted in S55 in the screenshot 72 of the entire document after editing (S61). As illustrated in FIG. 9, in one example, the highlighting 72A may be implemented by line segments surrounding an area including the change point in the screenshot 72. In another example, the highlighting 72A may be implemented by contrast enhancement such that an area including the change point has higher contrast than the other area. As illustrated in FIG. 6, the CPU 31 includes the screenshot 72 with the highlighting 72A in the "share via email" dialog 50 (S61).

In a case where the one or more change points do not include an entire deletion of particular edit data (S71:NO), the CPU 31 moves the process to S75. In a case where the one or more change points include an entire deletion of particular edit data (S71:YES), the CPU 31 includes a description 73 (refer to FIG. 9) indicating that an entire deletion operation has been performed in the "share via email" dialog 50 (S73).

In a case where the one or more change points include addition or change of stroke data (S75:YES), the CPU 31 includes a description 82 (refer to FIG. 9) indicating that a handwritten entry has been performed in the "share via email" dialog 50 (S77). The CPU 31 captures a screenshot 77 (refer to FIG. 9) from the document after editing. The screenshot 77 includes the stroke data as one of the one or more change points and a certain area surrounding the stroke data. The CPU 31 includes the screenshot 77 in the "share via email" dialog 50 (S79).

The CPU 31 then performs OCR processing on the screenshot 77. The CPU 31 loads and executes a program of the OCR processing from the storage unit 32. The CPU 31 analyzes a character image read from the screenshot 77 by the OCR processing, thereby obtaining one or more character codes. The CPU 31 obtains a text 76 that is a character string such as a character and/or a symbol indicated by the one or more character codes (S81). The CPU 31 includes the obtained text 76 in the "share via email" dialog 50 (S83), and moves the process to S111.

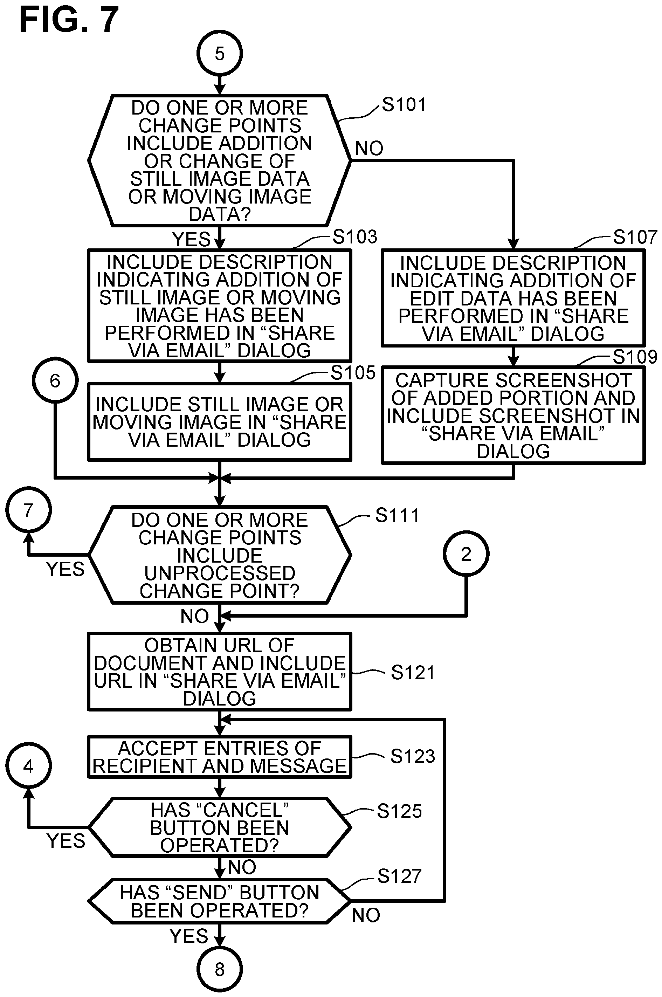

As illustrated in FIG. 7, in a case where the one or more change points include an unprocessed change point (S111:YES), the CPU 31 returns the process to S75. As illustrated in FIG. 6, in a case where the one or more change points include addition or change of character data (S75:NO, S91:YES), the CPU 31 includes, in the "share via email" dialog 50, a description 81 (refer to FIG. 9) indicating that a character string (text) such as a character and/or a symbol has been entered (S93). The CPU 31 captures, from the document after editing, a screenshot 75 (refer to FIG. 9) including a text 74 represented by character data as one of the one or more change points. The CPU 31 includes the screenshot 75 in the "share via email" dialog 50 (S95). The CPU 31 displays the obtained text 74 in the "share via email" dialog 50 (S97), and moves the process to S111.

As illustrated in FIG. 7, in a case where the one or more change points include addition or change of still image data or moving image data (S75:NO, S91:NO, S101:YES), the CPU 31 includes a description 83 (refer to FIG. 9) indicating, for example, that addition of a still image or a moving image has been performed in the "share via email" dialog 50 (S103). The CPU 31 obtains, from the document after editing, a still image 78 as one of the change points (refer to FIG. 9) or a moving image as one of the change points, and includes the still image 78 or the moving image in the "share via email" dialog 50 (S105). The CPU 31 moves the process to S111.

In a case where the one or more change points include addition or change of edit data of another type (S75:NO, S91:NO, S101:NO), the CPU 31 includes a description 84 (refer to FIG. 9) indicating that addition of edit data has been performed in the "share via email" dialog 50 (S107). The CPU 31 captures, from the document after editing, a screenshot 79 (refer to FIG. 9) including, for example, a figure represented by the edit data as one of the one or more change points, and includes the screenshot 79 in the "share via email" dialog 50 (S109). The CPU 31 moves the process to S111.

In a case where the one or more change points do not include an unprocessed change point after completing the processing for all the one or more change points, the CPU 31 obtains a URL of the document from the server 2 and includes the URL in the "share via email" dialog 50 (S121). The CPU 31 accepts entries to the recipient addition field 53 and the message entry field 54 in the "share via email" dialog 50 (S123). The CPU 31 includes the email address of the user selected for document sharing by the user of the client device 3A in the "share via email" dialog 50. In addition, the CPU 31 includes, in the "share via email" dialog 50, a message that has been entered by the user of the client device 3A in the message entry field 54.

In response to the "CANCEL" button 52 having been operated (S125:YES), the CPU 31 closes the "share via email" dialog 50 to discard the entered contents. The CPU 31 then returns the process to S45 to allow the user to continue creating the document. In a case where the "CANCEL" button 52 has not been operated (S125:NO) and the "SEND" button 51 has also not been operated (S127:NO), the CPU 31 returns the process to S123 to continue accepting entries to the "share via email" dialog 50.

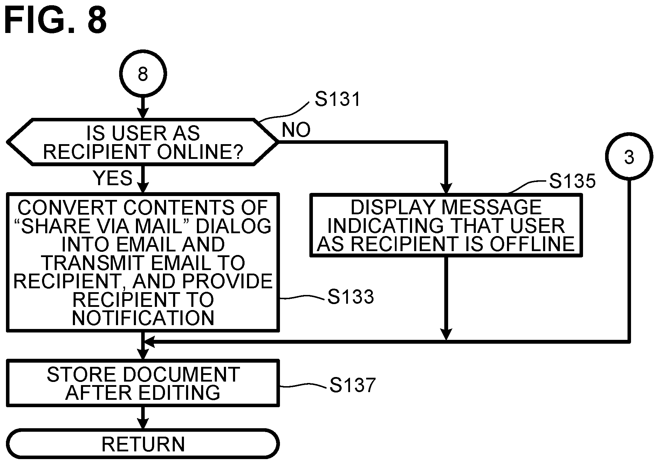

In response to the "SEND" button 51 having been operated (S127:YES), as illustrated in FIG. 8, the CPU 31 queries the server 2 as to whether the user added as a recipient in the recipient addition field 53 is online that the sharing application is running on the client device 3 of the user. In a case where the user as a recipient is offline (S131:NO), the CPU 31 displays a message indicating that the user as a recipient is offline on the display unit 33 of the client device 3A as a sender (S135). The CPU 31 stores the document after editing in the storage unit 32 (S137), and then ends the editing process to return to the main process of the sharing application.

In a case where the user as a recipient is online (S131:YES), the CPU 31 converts the contents included in the "share via email" dialog 50 into a notification email 70. As illustrated in FIG. 9, the notification email 70 includes an email address 85 of the user as a recipient, a subject line 86 informing editing of a document, an entered message 87, and a link 88 to the URL of the document. Further, the notification email 70 includes a screenshot 71 of the entire document before editing, a screenshot 72 of the entire document after editing with highlighting 72A, a description 73 informing that an entire deletion has been performed, a description 82 informing that a handwritten entry has been performed, a screenshot 77 of the handwritten entry, and a text 76 read by the OCR processing. The notification email 70 also includes a description 81 informing that a text has been entered, the entered text 74, a screenshot 75 of the entered text 74, a description 83 informing that a still image or a moving image has been added, the added still image 78 or moving image, a description 84 informing that edit data of another type such as a figure has been edited, and a screenshot 79 of the figure.

As illustrated in FIG. 8, the CPU 31 then transmits the notification email 70 to the target client device 3 used by the user as a recipient, for example, each of the client devices 3B and 3C (S133). Further, the CPU 31 provides each target client device 3 used by the user as a recipient, that is, each of the client devices 3B and 3C, with a notification notifying the transmission of the email. The CPU 31 stores the document after editing in the storage unit 32 (S137), and then ends the editing process to return to the main process of the sharing application.

As described above, in response to a user editing a document on a particular one of the client devices 3, the CPU 31 of the particular client device 3 that executes the information editing program includes edit data representing an edited portion of the document in a notification email 70, thereby notifying the others of the client devices 3 of the edited portion. Thus, users of the other client devices 3 can readily recognize the edited portion of the document.

The CPU 31 of the particular client device 3 that executes the information editing program includes, in the notification email 70, a screenshot 71 representing a display state of the entire document before editing and a screenshot 72 representing a display state of the entire document after editing, thereby notifying the others of the client devices 3 of the portion where the change has been made on the document. Thus, the users of the other client devices 3 can readily recognize the edited portion of the document by comparing the screenshot 71 with the screenshot 72.

The CPU 31 of the particular client device 3 that executes the information editing program includes, in the notification email 70, a screenshot 72 of the entire document after editing, with highlighting 72A being applied to the edited portion of the document, thereby notifying the others of the client devices 3 of the edited portion. The highlighting 72A in the screenshot 72 leads each of the users of the other client devices 3 to focus on the portion where the change has been made on the document, thereby causing the users of the other client devices 3 to readily recognize the edited portion of the document.

The CPU 31 of the particular client device 3 that executes the information editing program includes one or more partial images including specific portions, specifically screenshots 75, 77, and 79, in the notification email 70, thereby notifying the others of the client devices 3 of one or more edited portions of the document. The specific portion refers to edit data having a change point. The partial image including the specific portion refers to a cutout image of a portion where a change has been made. Thus, the users of the other client devices 3 can readily recognize the one or more portions where the changes have been made on information by confirming the screenshots 75, 77, and 79.

The CPU 31 of the particular client device 3 that executes the information editing program includes a text 76 obtained from the screenshot 77 of the stroke data by the OCR processing in the notification email 70, thereby notifying the others of the client devices 3 of the edited portion of the document. Thus, the users of the others of the client devices 3 can readily recognize the portion where the change has been made on the information by confirming the text 76 that has been entered as strokes, that is, by handwriting.

In response to still image data or moving image data being included in a document, the CPU 31 of the particular client device 3 that executes the information editing program includes, in the notification email 70, a still image represented by the still image data or a moving image represented by the moving data, thereby notifying the others of the client devices 3 of the edited portion of the document. Thus, the users of the other client devices 3 can readily recognize that the change point involves addition of a still image or moving image.

In the embodiment described above, each of the client devices 3, 3A, 3B, and 3C corresponds to a "terminal" of the present invention. The document corresponds to "information" of the present invention. The state of the document before editing corresponds to a "first state" of the present invention. The CPU 31 that executes S43 corresponds to a "storing step" of the present invention. The state of the document after editing corresponds to a "second state" of the present invention. The CPU 31 that executes S54 corresponds to an "obtaining step" of the present invention. The edit data corresponds to "change data" of the present invention. The CPU 31 that executes S55 corresponds to an "extracting step" of the present invention. The notification email 70 corresponds to a "message" of the present invention. The CPU 31 that executes S133 corresponds to a "notifying step" of the present invention. The screenshot 71 corresponds to a "first entire image" of the present invention. The screenshot 72 corresponds to a "second entire image" of the present invention. The CPU 31 that executes S53 and S59 corresponds to a "display image generating step" of the present invention. The CPU 31 that executes S61 corresponds to a "highlighting step" of the present invention. The edit data having the change point corresponds to a "specific portion" of the present invention. The screenshot 77 corresponds to a "partial image" of the present invention. The CPU 31 that executes S79 corresponds to a "partial image generating step" of the present invention. The CPU 31 that executes S81 corresponds to a "reading step" of the present invention. The text 76 corresponds to a "character string" of the present invention. The CPU 31 that executes S105 corresponds to a "data obtaining step" of the present invention.

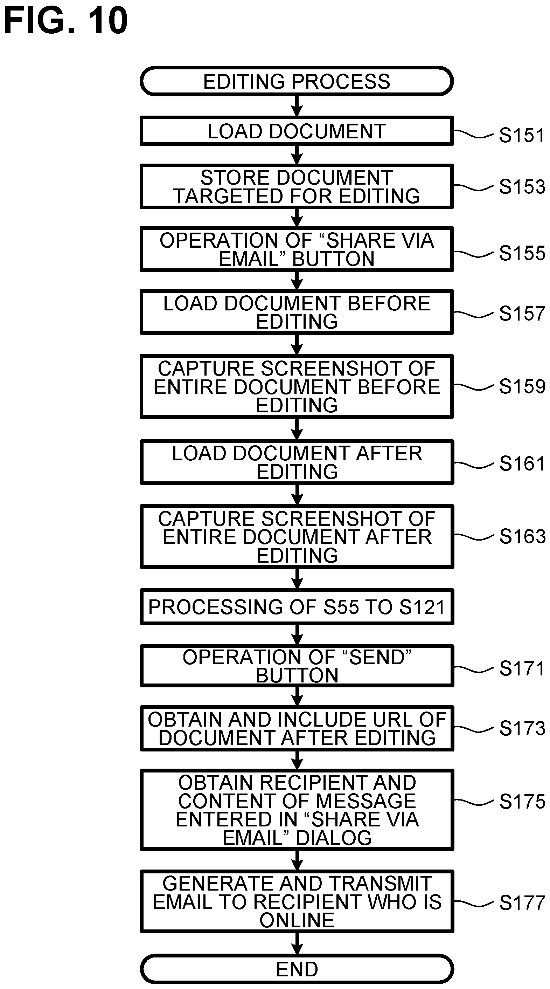

The present invention can be variously modified from the above embodiment. Various modifications described below can be combined with each other as long as no contradiction occurs. Although the information editing program is executed by the CPU 31 of the particular client device 3, but the CPU 21 of the server 2 may execute a process corresponding to the editing process illustrated in FIGS. 5 to 8. For example, as illustrated in FIG. 10, in an editing process executed by the server 2, in response to a particular client device 3 loading (downloading) a document targeted for editing (S151), the CPU 21 of the server 2 stores the document targeted for editing in the storage unit 22 (S153). Next, in response to the "SHARE VIA EMAII," button having been operated on the particular client device 3 after completing the document editing (S155), the CPU 21 loads the document targeted for editing stored in the storage unit 22 into a working area (S157). Then, the CPU 21 captures a screenshot of the entire document targeted for editing and stores the screenshot in the working area (S159). In response to editing being performed on the document targeted for editing, target edit data of the document is uploaded in real time from the particular client device 3. Thus, the CPU 21 loads the document after editing that has been updated with the latest edit data, into the working area (S161).

Then, the CPU 21 captures a screenshot of the entire document after editing and stores the screenshot in the working area (S163). The CPU 21 performs the same or similar processing as S55 to S121 of the editing process executed in the particular client device 3, and generates the contents to be included in the notification email 70. The contents to be included in the notification email 70 are stored into the working area of the server 2, instead of being included in the "share via email" dialog 50 of the particular client device 3. Then, in response to the "SEND" button 51 having been operated after completing the entry to the "share via email" dialog 50 of the notification email 70 on the particular client device 3 (S171), the CPU 21 obtains the URL of the document after editing (S173). The CPU 21 obtains the recipient and the content of the message entered in the "share via email" dialog 50 from the particular client device 3 (S175). The CPU 21 generates a notification mail 70 that includes a screenshot 71 of the entire document before editing and a screenshot 72 of the entire document after editing which are stored in the working area, the contents to be included in the notification email 70, and the recipient and the contents of the message received from the particular client device 3. The CPU 31 transmits the generated notification email 70 and a notification notifying the transmission of the email to the other client devices 3 of the users as recipients (S177). As described above, the server 2 performs the process of generating the notification email 70, thereby reducing a load on the particular client device 3 for generating the notification email 70.

The information editing system 1 may be configured such that no server 2 is included and the client devices 3 are connected to each other via the network line 5. In this case, one of the client devices 3 may function as the server 2 that shares a document and generates a URL. A specific one of the client devices 3 may provide the function of the server 2 at all times or a different one of the client devices 3 may provide the function of the server 2 for each document. In one example, the client device 3 that has created a new document may provide the function of the server 2 for the document.

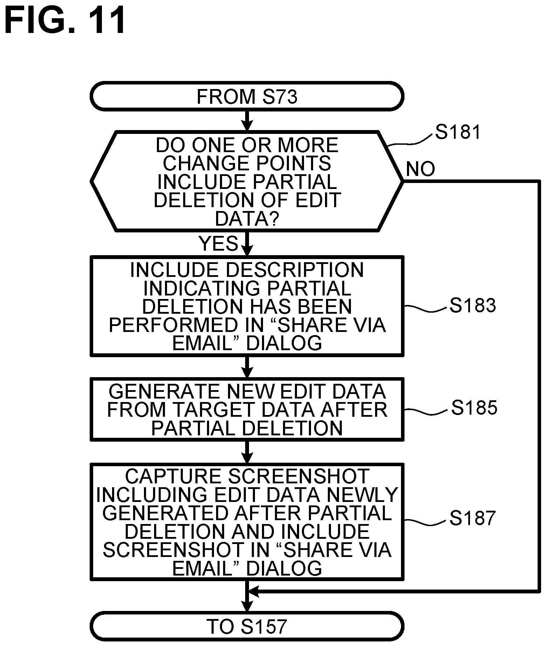

In response to particular edit data having been deleted in its entirety, in S71 and S73, the description 73 notifying that the particular edit data has been deleted in its entirety is included in the notification email 70. Nevertheless, a particular portion of the edit data may be deleted based on partial deletion data and the edit data after editing is generated as new edit data. In this case, a description notifying that the particular portion of the edit data has been deleted may be included in the notification email 70. For example, as illustrated in FIG. 11, the editing process may include S181 to S187 between S73 and S75. In a case where the one or more change points do not include a partial deletion of edit data (S181:NO), the CPU 31 moves the process to S75. In a case where the one or more change points include partial deletion data (S181:YES), the CPU 31 includes a description indicating that a partial deletion has been performed on the edit data in the "share via email" dialog 50 (S183). The CPU 31 compares the partial deletion data and the target data that is the edit data targeted for partial deletion, and deletes a portion that positionally coincides with the partial deletion data from the target data. The CPU 31 generates a new edit data from the target data after partial deletion (S185). The CPU 31 captures, from the document after editing, a screenshot including the edit data newly generated as a result of the partial deletion and a certain area surrounding the edit data. The CPU 31 includes the screenshot in the "share via email" dialog 50 (S187), and moves the process to S75. As described above, the CPU 31 of the particular client device 3 that executes the information editing program includes, in the notification email 70, the screenshot of the edit data newly generated as a result of the partial deletion and a description that the partial deletion has been performed, thereby notifying the others of the client devices 3 of the edited portion of the document. Thus, the users of the other client devices 3 can readily recognize the portion partially changed by the partial deletion. In this modification, the partial deletion data corresponds to a "partially deleted portion" of the present invention. The CPU 31 that executes S155 corresponds to a "partially deleted portion image generating step" of the present invention. The description reporting the partial deletion corresponds to a "partial deletion report" of the present invention.

In S79, the CPU 31 generates a screenshot 77 including stroke data having a change point and a certain area surrounding of the stroke data. Nevertheless, the CPU 31 may generate a screenshot only including the stroke data having the change point without including the certain area surrounding of the stroke data. In S81, the CPU 31 includes, in the notification email 70, the text 76 obtained from the screenshot 77 of the stroke data by the OCR processing. Nevertheless, the CPU 31 may include only the screenshot 77 in the notification email 70 without performing the OCR processing. Alternatively, the CPU 31 may include, in the notification email 70, a text 76 obtained by the OCR processing without including the screenshot 77 of the stroke data in the notification email 70.

In S95, the CPU 31 generates a screenshot 75 of the character data having a change point and includes the screenshot 75 in the notification email 70. Alternatively, the CPU 31 may include only the text 74 in the notification email 70 without including the screenshot 75 in the notification email 70. In the notification email 70, the CPU 31 applies the highlighting 72A to the screenshot 72 of the document after editing in order to point out the location of the change point on the document after editing, but the highlighting 72A might not necessarily be applied.

In S105, the CPU 31 includes, in the notification email 70, a still image 78 represented by still image data having a change point or a moving image represented by moving data having a change point. Thus, the user of the client device 3 who has received the notification email 70 can confirm the entire contents of the still image 78 or the moving image having the change point by opening the notification email 70. Alternatively, in one example, the CPU 31 may obtain the URL of the storage area that stores the still image or moving image having the change point from the server 2 and include the obtained URL in the notification email 70. In another example, the CPU 31 may capture or generate a thumbnail image that is an image of one of frames of the moving image or a thumbnail moving image that is a moving image of one of scenes of the moving image, and include the captured or generated thumbnail image or thumbnail moving image in the notification email 70.

### Reference Signs List

1: information editing system
2: server
3, 3A, 3B, 3C: client device
21, 31: CPU
22, 32: storage unit
70: notification email
71, 72: screenshot
72A: highlighting
73, 81, 82, 83, 84: description
74, 76: text
75, 77, 79: screenshot
78: image

## Claims

1. A non-transitory computer-readable storage medium storing an information editing program that enables sharing of information among a first terminal and a second terminal and editing of the information in each of the first terminal and the second terminal, the information editing program causing a computer to execute:
storing a state of information entered or edited on the first terminal as a first state;
subsequent to storing the information in the first state, obtaining a state of the information after editing as a second state in response to the information having been edited on the first terminal;
comparing the information in the second state and the information in the first state;
extracting change data based on a result of the comparison, the change data representing a changed portion that has been changed from the information in the first state; and
notifying the second terminal of the changed portion by including the change data in a message, the second terminal being different from the first terminal.

2. The information editing program according to claim 1, wherein
the extracting the change data includes generating a display image, the display image including:
a first entire image representing a display state of the entire information in the first state to be displayed on the second terminal; and
a second entire image representing a display state of the entire information in the second state to be displayed on the second terminal, and
the change data included in the message includes the first entire image and the second entire image.

3. The information editing program according to claim 2, wherein
the extracting the change data includes specifying the changed portion of the information in the second state that has changed compared to the information in the first state, and applying highlighting to the specified changed portion.

4. The information editing program according to any one of claims 1 to 3, wherein
the extracting the change data includes specifying a specific portion and generating a partial image, the specific portion being the changed portion of the information in the second state that has changed compared to the information in the first state, the partial image representing a display state of an image including the specific portion and a certain area surrounding the specific portion,
the change data included in the message includes the partial image.

5. The information editing program according to claim 4, wherein
the terminal allows for information entry through stroke drawing,
in a case where the changed portion of the information in the second state that has changed compared to the information in the first state is a portion entered by stroke drawing, the extracting the change data includes reading the portion entered by the stroke drawing by optical character recognition to obtain a character code, and
the change data included in the message includes a character string based on the character code.

6. The information editing program according to claim 5, wherein
in a case where the changed portion of the information in the second state that has changed compared to the information in the first state is a partially deleted portion, the extracting the change data includes generating a partially deleted portion image, the partially deleted portion representing a partial change of the information performed by partial deletion, the partially deleted portion image representing a display state of the entire information in the second state to be displayed in the second terminal, and
the change data included in the message includes the partially deleted portion image and a partial deletion report.

7. The information editing program according to claim 5, wherein
in a case where the changed portion of the information in the second state that has changed compared to the information in the first state is a still image or a moving image, the extracting the change data includes obtaining data corresponding to the still image or the moving image, and
the change data included in the message includes the data corresponding to the still image or the moving image.

8. An information editing method executable by a computer in accordance with an image editing program that enables sharing of information among a first terminal and a second terminal and editing of the information in each of the first terminal and the second terminal, the information editing method comprising:
storing a state of information entered or edited on the first terminal as a first state;
subsequent to storing the information in the first state, obtaining a state of the information after editing as a second state in response to the information having been edited on the first terminal;
comparing the information in the second state and the information in the first state;
extracting change data based on a result of the comparison, the change data representing a changed portion that has been changed from the information in the first state; and
notifying the second terminal of the changed portion by including the change data in a message, the second terminal being different from the first terminal.

9. An information editing system comprising:
a server;
a first terminal and a second terminal connected to each other via the server,
the information editing system enabling sharing of information among the first terminal and the second terminal and editing of the information in each of the first terminal and the second terminal, wherein
the server is configured to:
receive information that has been entered or edited on the first terminal and store a state of the received information as a first state;
subsequent to storing the information in the first state, obtain a state of the information after editing as a second state in response to the information having been edited on the first terminal;
compare the information in the second state and the information in the first state;
extract change data based on a result of the comparison, the change data representing a changed portion that has been changed from the information in the first state; and
notify the second terminal of the changed portion by including the change data in a message, the second terminal being different from the first terminal.

10. An information editing system comprising a first terminal and a second terminal, the information editing system enabling sharing of information among the first terminal and the second terminal and editing of the information in each of the first terminal and the second terminal, wherein
the first terminal is configured to:
receive information that has been entered or edited on the first terminal and store a state of the received information as a first state;
subsequent to storing the information in the first state, obtain a state of the information after editing as a second state in response to the information having been edited on the first terminal;
compare the information in the second state and the information in the first state;
extract change data based on a result of the comparison, the change data representing a changed portion that has been changed from the information in the first state; and
notify the second terminal of the changed portion by including the change data in a message, the second terminal being different from the first terminal.
